# EUROPEAN PATENT APPLICATION

(11) **EP 2 106 139 A2**
(43) Date of publication of application: **30.09.2009**
(21) Application number: 09152564.2
(22) Date of filing: 11.02.2009
(51) Int. Cl.: H04N 7/173, H04N 5/445, H04L 12/28

(54) **Methods for configuring video apparatus according to video system content, and video apparatus and server applying the same**

(30) Priority: 26.03.2008 KR 20080027814
(71) Applicant: Samsung Electronics Co., Ltd., Suwon-si, Gyeonggi-do 442-742 (KR)
(72) Inventor: Kim, Won-il, Gwacheon-si Gyeonggi-do (KR); Kwon, Yong-hwan, Seongnam-si Gyeonggi-do (KR); Lee, Sang-hee, Seodaemun-gu Seoul (KR)
(74) Representative: Fearnside, Andrew Simon

(57) **Abstract**

Methods for configuring a video apparatus, and video apparatus and server apparatus are provided. The video apparatus transmits video apparatus information and content information to an external server, receives setting information corresponding to the video apparatus information and content information from the external server, and thereby configures the video apparatus. Therefore, it is possible for a user to configure the video apparatus to preferably be more optimally suited to the video apparatus and content to be played back.

## Description

### CROSS-REFERENCE TO RELATED APPLICATIONS

This application claims priority from Korean Patent Application No. 10-2008-0027814, filed on March 26, 2008, in the Korean Intellectual Property Office, the disclosure of which is incorporated herein by reference in its entirety.

### BACKGROUND OF THE INVENTION

### 1. Field of the Invention

Apparatuses and methods consistent with the present invention relate to configuring a video apparatus and providing a video apparatus and a server, and more particularly, though not exclusively, to configuring a video apparatus according to setting information for the video apparatus received from an external source, and providing a video apparatus and a server.

### 2. Description of the Related Art

Televisions (TVs) have developed so as to offer users a greatly enhanced viewing experience. Additionally, users are turning rooms with TVs into home theaters in order to make their homes similar to movie theaters.

In order to use TVs in various environments as described above, users need to set TVs to the optimum settings according to the situation. For example, if a user desires to watch a movie on a TV, the user needs to set the current mode to a wide screen display mode to match the screen ratio of the movie and 5.1-channel sound mode.

Recent technological developments have brought a multiplicity of functions and types of TVs, and a variety of content usable by TVs may be provided thereby. Additionally, audio/video (AV) apparatuses capable of being connected to TVs by users have become more diverse.

However, it can be difficult for users to know all the various functions of TVs, and to manually adjust settings in order to view a specific kind of content. Additionally, users need to know all settings for AV apparatuses connected to TVs and adjust the settings for each individual situation in order to configure the AV apparatuses so as to support content which they desire to view, all of which increases user inconvenience.

Users desire to view content in the best conditions. Therefore, there is a need for methods for users to be able to set the configuration of video systems more conveniently.

### SUMMARY OF THE INVENTION

According to the present invention there is provided an apparatus and method as set forth in the appended claims. Other features of the invention will be apparent from the dependent claims, and the description which follows.

In one aspect, the present invention provides a method for configuring a video apparatus according to setting information corresponding to content information or video apparatus information by receiving the setting information from an external server, most desirably so that a user may configure the video apparatus more conveniently, and a video apparatus applying the method.

In another aspect, the present invention provides a method for configuring a video apparatus, which receives at least one of external video apparatus information, configuration information and content information from an external video apparatus, receives setting information corresponding to the received information from a server, and transmits the received setting information to the external video apparatus, and a server applying the method.

In a further aspect, the present invention also provides a method for configuring a video apparatus by selecting at least one from among a variety of setting information based on video system configuration information or content information, and a video apparatus applying the method.

According to a first aspect of the present invention, there is provided avideo apparatus comprising an interface which is arranged to transmit content information from the video apparatus to an external server and to receive setting information corresponding to the content information from the external server; and a controller which is arranged to configure the video apparatus according to the received setting information. The video apparatus may be connected to the external server.

The setting information may comprise at least one of setting values of the video apparatus and setting values of an external apparatus connected to the video apparatus.

The controller may be arranged to control the setting values of the external apparatus to be transmitted to the external apparatus.

The content information may comprise one of information regarding content to be played back on the video apparatus and information regarding content received from the external apparatus connected to the video apparatus.

The video apparatus may comprise a broadcast receiving apparatus.

The setting information may comprise at least one of default setting values, screen setting values, audio setting values and remote control setting values.

The content information may comprise at least one of information regarding a title, information regarding a producer and information regarding a genre of content.

The external apparatus may be connected to the video apparatus using an Institute of Electrical and Electronics Engineers (IEEE) 1394 interface or a High-Definition Multimedia Interface (HDMI) Consumer Electronic Control (CEC) interface.

According to a second aspect of the present invention, there is provided a method comprising transmitting content information from the video apparatus to an external server; receiving setting information corresponding to the content information from the external server; and configuring the video apparatus according to the received setting information. The method may comprise configuring said video apparatus connected to the external server.

The setting information may comprise at least one of setting values of the video apparatus and setting values of an external apparatus connected to the video apparatus.

The method may further comprise transmitting the setting values of the external apparatus to the external apparatus.

The content information may comprise one of information regarding content to be played back on the video apparatus and information regarding content received from the external apparatus connected to the video apparatus.

The video apparatus may comprise a broadcast receiving apparatus.

The setting information may comprise at least one of default setting values, screen setting values, audio setting values and remote control setting values.

The content information may comprise at least one of information regarding a title, information regarding a producer and information regarding a genre of content.

According to a third aspect of the present invention, there is provided a video apparatus (which maybe connected to an external server), the video apparatus comprising an interface which is arranged to transmit video apparatus information to an external server and to receive setting information corresponding to the video apparatus information from the external server; and a controller which is arranged to configure the video apparatus according to the received setting information.

The interface may be arranged to transmit configuration information of a video system comprising the video apparatus to the external server. The setting information may comprise at least one of setting values of the video apparatus and setting values of an external apparatus connected to the video apparatus. The controller may be arranged to control the setting values of the external apparatus to be transmitted to the external apparatus.

The configuration information of the video system may comprise the video apparatus information and external apparatus information.

The setting information may comprise at least one of default setting values, screen setting values, audio setting values and remote control setting values.

The video apparatus information may comprise at least one of information regarding a manufacturer, information regarding a production number and information regarding a model name of the video apparatus.

The external apparatus may be connected to (or connectable to) the video apparatus using an Institute of Electrical and Electronics Engineers (IEEE) 1394 interface or a High-Definition Multimedia Interface (HDMI) Consumer Electronic Control (CEC) interface.

According to a fourth aspect of the present invention, there is provided a method for configuring a video apparatus (which may be connected to an external server) the method comprising transmitting video apparatus information to an external server; receiving setting information corresponding to the video apparatus information from the external server; and configuring the video apparatus according to the received setting information.

The transmitting may comprise transmitting configuration information of a video system comprising the video apparatus to the external server. The setting information may comprise at least one of setting values of the video apparatus and setting values of an external apparatus connected to the video apparatus. The method may further comprise transmitting the setting values of the external apparatus to the external apparatus.

The configuration information of the video system may comprise the video apparatus information and external apparatus information.

According to a fifth aspect of the present invention, there is provided a server connectable to or connected to an external video apparatus, the server comprising an interface which is arranged to receive at least one of external video apparatus information, configuration information of a video system comprising the external video apparatus and content information, from the external video apparatus; and a controller which is arranged to control setting information corresponding to the received at least one of external video apparatus information, configuration information and content information to be transmitted to the external video apparatus.

The server may further comprise a storage unit which is arranged to store a plurality of pieces of setting information. The interface may receive the plurality of pieces of setting information from a plurality of external database servers. The controller may be arranged to control the received setting information to be classified and stored in the storage unit according to the external video apparatus information, configuration information and content information.

The interface may be arranged to receive the plurality of pieces of setting information from a video manufacturer's server or a content producer's server.

According to a sixth aspect of the present invention, there is provided a method for configuring an external video apparatus by a server connected to the external video apparatus, the method comprising receiving at least one of external video apparatus information, configuration information of a video system comprising the external video apparatus and content information, from the external video apparatus; and transmitting setting information corresponding to the received at least one of external video apparatus information, configuration information and content information to the external video apparatus.

The method may further comprise receiving a plurality of pieces of setting information from a plurality of external database servers; and classifying and storing the received setting information according to the external video apparatus information, configuration information and content information.

The method may further comprise receiving the plurality of pieces of setting information from a video manufacturer's server or a content producer's server.

According to a seventh aspect of the present invention, there is provided a video apparatus connected to an external apparatus, the video apparatus comprising a storage unit which is arranged to store a plurality of pieces of setting information; and a controller which is arranged to select at least one from among the plurality of pieces of setting information, based on configuration information of a video system comprising the video apparatus and external apparatus, or based on content information, and which is arranged to configure the video apparatus according to the selected setting information.

The setting information may comprise at least one of setting values of the video apparatus and setting values of the external apparatus. The controller may be arranged to control the setting values of the external apparatus to be transmitted to the external apparatus.

The video apparatus may further comprise an interface which is arranged to receive the plurality of pieces of setting information from a plurality of external database servers. The controller may be arranged to control the received setting information to be classified and stored in the storage unit according to video apparatus information, the configuration information and the content information.

According to an eighth aspect of the present invention, there is provided a method for configuring a video apparatus connected to an external apparatus, the method comprising selecting at least one from among a plurality of pieces of setting information stored in a storage device, based on configuration information of a video system comprising the video apparatus and external apparatus, or based on content information; and configuring the video apparatus according to the selected setting information.

The setting information may comprise at least one of setting values of the video apparatus and setting values of the external apparatus. The method may further comprise transmitting the setting values of the external apparatus to the external apparatus.

The method may further comprise receiving the plurality of pieces of setting information from a plurality of external database servers; and classifying and storing the received setting information in the storage device according to video apparatus information, the configuration information and the content information.

### BRIEF DESCRIPTION OF THE DRAWINGS

For a better understanding of the invention, and to show how embodiments of the same may be carried into effect, reference will now be made, by way of example, to the accompanying diagrammatic drawings in which:

FIG. 1 illustrates a configuration setting system for a TV according to an exemplary embodiment of the present invention;

FIG. 2 is a block diagram of a TV shown in FIG. 1, according to an exemplary embodiment of the present invention;

FIG. 3 is a block diagram of a setting information server shown in FIG. 1, according to an exemplary embodiment of the present invention;

FIG. 4 is a flowchart explaining a method for configuring a TV according to an exemplary embodiment of the present invention;

FIG. 5 illustrates a configuration setting system for a TV according to another exemplary embodiment of the present invention; and

FIG. 6 is a flowchart explaining a method for configuring a TV according to another exemplary embodiment of the present invention.

### DETAILED DESCRIPTION OF EXEMPLARY EMBODIMENTS

Certain exemplary embodiments of the present invention will now be described in greater detail with reference to the accompanying drawings.

In the following description, same drawing reference numerals are used for the same elements even in different drawings.

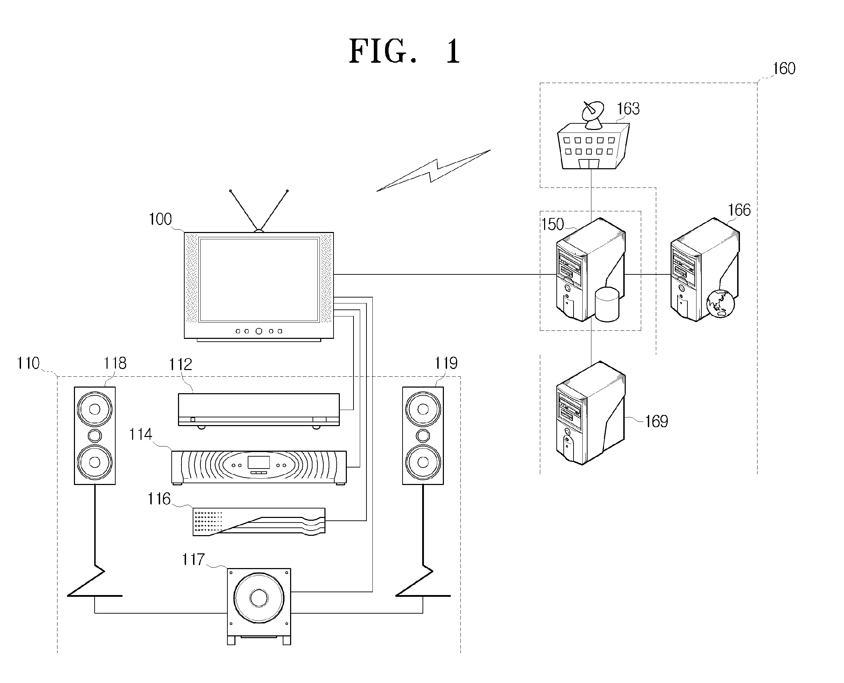

FIG. 1 illustrates a configuration setting system for a video apparatus according to an exemplary embodiment of the present invention. The configuration setting system comprises a video apparatus (e.g., a TV) 100, external audio/video (AV) apparatuses 110, a setting information server 150 and external database servers 160.

The TV 100 receives a broadcast and displays the received broadcast on a screen. Additionally, the TV 100 receives video signals from the external AV apparatuses 110 connected thereto, and outputs sound. The TV 100 also receives setting information from the setting information server 150, and is configured according to the received setting information. Additionally, the TV 100 transmits the received setting information to the external AV apparatuses 110.

The setting information refers to information required to set the configuration of the TV 100 and external AV apparatuses 110, and comprises default setting values, screen setting values, audio setting values and remote control setting values.

The default setting values are used to set basic functions of the TV 100 and external AV apparatuses 110, and comprise a menu transparency adjustment value, a system shutdown setting value, a system start-up setting value, a power-suspend setting value, a value indicating whether an afterimage prevention mode is set and a value indicating whether a menu help text is displayed.

The screen setting values are configuration setting values of video displayed by the TV 100 and the external AV apparatuses 110. The screen setting values may comprise a gray level adjustment value, a brightness adjustment value, a sharpness adjustment value, a color density adjustment value, a background color adjustment value, a screen scale adjustment value, a screen ratio adjustment value, a value indicating whether noise removal is performed, a value indicating whether the image quality improvement is performed, a gamma adjustment value, a white balance (WB) adjustment value, a value indicating whether a picture-in-picture (PIP) function is performed and/or a screen mode setting value.

The audio setting values are configuration setting values of sound output from the TV 100 and the external AV apparatuses 110. The audio setting values may comprise a left/right balance adjustment value, an equalizer adjustment value, a value indicating whether stereo mode is set, a value indicating whether a multi-sound mode is set, a value indicating whether a sound improvement function (for example, a sound retrieval system (SRS) or Dolby) is set, a value indicating whether an audio amplifier is operated and/or a value for setting the number of sound output channels.

The remote control setting values are to configuration setting values of remote controllers of the TV 100 and external AV apparatuses 110, and may comprise a remote control code configuration, a remote control key configuration and/or layout information.

The external AV apparatuses 110 may comprise a personal video recorder (PVR) 112, a digital versatile disc (DVD) player 114, a set-top box (STB) 116 and 2.1-channel speakers 117, 118 and 119. The DVD player 114 and STB 116 transmit to the TV 100 content information regarding video to be played back on the DVD player 114 and STB 116. The 2.1-channel speakers 117, 118 and 119 receive sound from the TV 100.

The external AV apparatuses 110 transmit AV apparatus information to the TV 100. Additionally, the external AV apparatuses 110 are configured according to the setting information received from the TV 100. Here, the AV apparatus information is information regarding the external AV apparatuses 110. According to exemplary embodiments of the present invention, apparatus information includes AV apparatus information and TV information.

The external AV apparatuses 110 may comprise apparatuses other than the PVR 112, DVD player 114, STB 116 and 2.1-channel speakers 117, 118 and 119, for example, a video cassette recorder (VCR), a video game console or a 5.1-channel speaker.

The setting information server 150 receives setting information from the external database servers 160, constructs a database containing the received setting information, and transmits setting information suitable for the TV 100 selected from the database to the external database servers 160. The setting information server 150 is connected to the TV 100 and the external database servers 160 via a public network such as the Internet or a telephone line.

In more detail, the setting information server 150 receives a variety of setting information regarding video apparatuses and pieces of content from the external database servers 160. The setting information server 150 then classifies and stores the received setting information according to the type of video apparatus and the type of content, to construct a setting information database. Accordingly, the setting information server 150 may serve as a hub site which provides setting information suitable for each video apparatus.

The external database servers 160 comprise a broadcast station database server 163, a user database server 166 and a producer database server 169. The external database servers 160 transmit a variety of setting information to the setting information server 150.

More specifically, the broadcast station database server 163 contains data provided by a broadcast station, and transmits setting information for video apparatuses suitable for each broadcast program to the setting information server 150. The broadcast station contains information pertaining to broadcast programs, so as to provide such setting information for video apparatuses suitable for each broadcast program.

The user database server 166 sends to the setting information server 150 a variety of setting information, which is determined to be most suitable for various video apparatuses by the user as a result of using the video apparatuses. More specifically, after using various video apparatuses, a user uploads setting information determined to be most suitable for a currently used video apparatus to the user database server 166. The user database server 166 then transmits the setting information uploaded by the user to the setting information server 150.

The producer database server 169 contains data provided by content producers or video apparatus producers. Setting information suitable for content may be well known to content producers (for example, movie companies or movie directors), and setting information suitable for video apparatuses may be well known to video apparatus producers (for example, manufacturers of video apparatuses). Accordingly, content producers and video apparatus producers may provide setting information most suitable for content and video apparatuses, based on information regarding the content and video apparatuses, using the producer database server 169. Additionally, the producer database server 169 transmits the provided setting information to the setting information server 150.

The external database servers 160 may comprise any database server capable of providing setting information for video apparatuses.

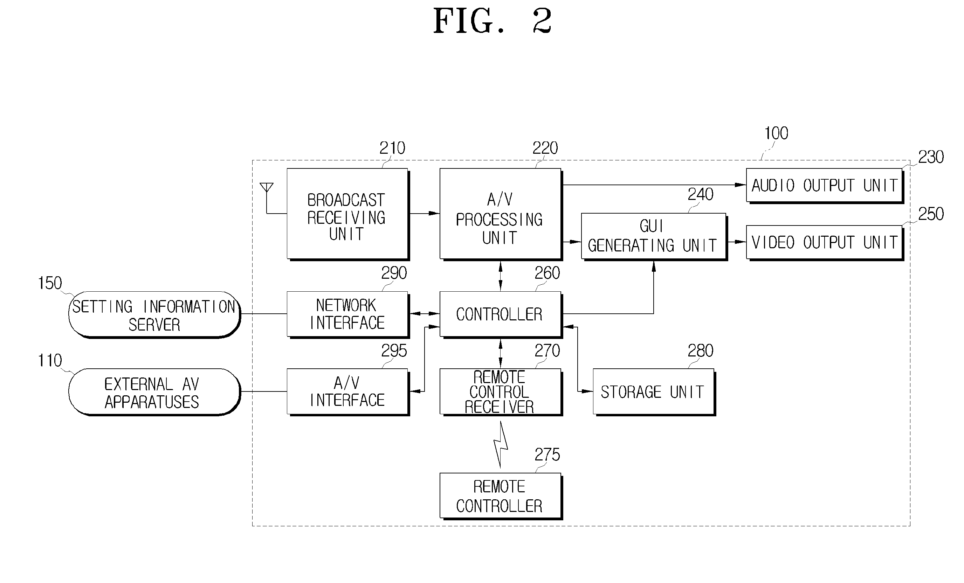

Hereinafter, the TV 100 will be described in detail with reference to FIG. 2.

The TV 100 comprises a broadcast receiving unit 210, an A/V processing unit 220, an audio output unit 230, a graphical user interface (GUI) generating unit 240, a video output unit 250, a controller 260, a remote control receiver 270, a remote controller 275, a storage unit 280, a network interface 290 and an A/V interface 295.

The broadcast receiving unit 210 receives a broadcast from a broadcast station or a satellite via a cable and/or wirelessly, and demodulates the received broadcast.

The A/V processing unit 220 performs signal processing, such as video decoding, video scaling, or audio decoding on the video signal and audio signal output from the broadcast receiving unit 210 and controller 260. The A/V processing unit 220 outputs the processed video signal and the processed audio signal to the GUI generating unit 240 and the audio output unit 230, respectively.

Alternatively, the A/V processing unit 220 may process the video and audio signals in a compressed format in order to store the video and audio signals in the storage unit 280.

The audio output unit 230 outputs the audio signal output from the A/V processing unit 220 to a speaker (not shown).

The GUI generating unit 240 generates a GUI to be provided to a user, and displays the generated GUI (for example, superimposed over video output from the A/V processing unit 220).

The video output unit 250 may display the video output from the A/V processing unit 220 on a display (not shown), or may output the video to an external apparatus (for example, an external display) connected through an external output terminal.

The remote control receiver 270 receives user operating information received via the remote controller 275 and transmits the user operating information to the controller 260. Additionally, a user may enter a setting information request command using the remote controller 275.

The storage unit 280 stores content received from the broadcast receiving unit 210 or content downloaded via the network interface 290. The storage unit 280 may output the video and sound stored therein to the A/V processing unit 220. The storage unit 280 may be implemented as a hard disk or nonvolatile memory.

The network interface 290 connects the TV 100 to the setting information server 150 using the public network such as the Internet or a telephone line. The network interface 290 enables the TV 100 to transmit to the setting information server 150 content information of the TV 100, TV information, and configuration information of a video system. Additionally, the network interface 290 enables the setting information server 150 to receive from the TV 100 setting information corresponding to the content information of the TV 100, the TV information and the configuration information of the video system.

Here, the content information of the TV 100 is information regarding content to be played back on the TV 100, and may comprise, for example, information regarding the title, producer or genre of the content. The content information of the TV 100 may be stored in the TV 100 or may be received from the external AV apparatuses 110. For example, if content is a broadcast program, the content information of the TV 100 is received from a broadcast station to the TV 100, or if content is a movie played back by a DVD player, the content information of the TV 100 is received from the DVD player 114 to the TV 100.

The TV information is information regarding the specification of the TV 100, and may comprise, for example, information regarding the manufacturer, production number or model name of the TV 100.

The configuration information of the video system refers to configuration information for a video system constructed by the TV 100 and external AV apparatuses 110. Accordingly, the configuration information of the video system comprises not only the TV information and AV apparatus information, but also information regarding the connection between the TV 100 and external AV apparatuses 110.

The AV interface 295 connects the TV 100 to the external AV apparatuses 110, in order to allow the TV 100 to transceive video and audio information with the external AV apparatuses 110.

The AV interface 295 receives the AV apparatus information from the external AV apparatuses 110, and transmits the setting information for the external AV apparatuses 110 received from the setting information server 150 to the external AV apparatuses 110.

The AV interface 295 may have various configurations according to the type of external AV apparatus 110 present, for example, an Institute of Electrical and Electronics Engineers (IEEE) 1394 interface or a High-Definition Multimedia Interface (HDMI) Consumer Electronic Control (CEC) interface. The IEEE 1394 and HDMI CEC interfaces are able to transmit not only A/V signals but also control signals, so the TV 100 may transmit its own setting information to the external AV apparatuses 110.

The controller 260 recognizes user commands based on the user operating information received via the remote controller 275, and controls the overall operation of the TV 100 according to the user commands.

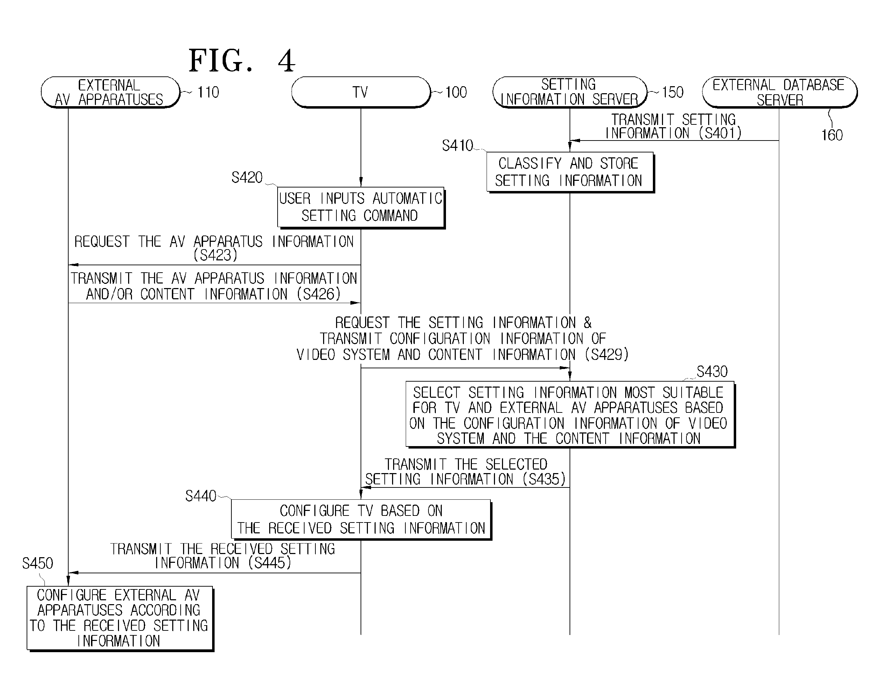

Additionally, the controller 260 controls the configuration of the TV 100 according to the setting information for the TV 100 received from the setting information server 150. Other functions of the controller 260 will be later described in detail with reference to FIG. 4.

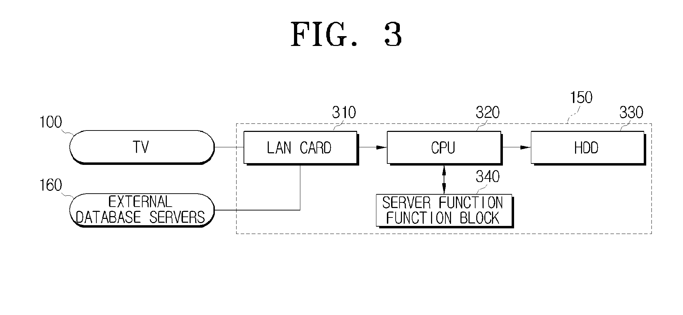

Hereinafter, the setting information server 150 will be described with reference to FIG. 3.

The setting information server 150 comprises a local area network (LAN) card 310, a central processing unit (CPU) 320, a hard disk drive (HDD) 330 and a server function block 340.

The LAN card 310 connects the setting information server 150 to the TV 100 and external database servers 160. Additionally, the LAN card 310 receives from the TV 100 the content information of the TV 100, the TV information and the configuration information of the video system, and transmits to the TV 100 setting information selected by the CPU 320. Additionally, the LAN card 310 receives a variety of setting information regarding various video apparatuses and pieces of content from the external database servers 160.

In addition to the LAN card 310, the present invention is equally applicable to any interface capable of being connected to a network.

The CPU 320 controls all functions of the setting information server 150. The CPU 320 selects setting information most suitable for the TV 100 and external AV apparatuses 110 using the TV information, the AV apparatus information, the configuration information of the video system, and information regarding content able to be played back by the TV 100 and external AV apparatuses 110 received via the LAN card 310.

Other functions of the CPU 320 will be later described in detail with reference to FIG. 4.

The HDD 330 stores a variety of setting information, and more specifically, stores the setting information received from the external database servers 160. In more detail, the HDD 330 classifies and stores the received setting information according to the video apparatus information, the configuration information of the video system and the content information, so that a database containing the setting information may be constructed in the HDD 330.

Additionally, the present invention is equally applicable to storage devices other than the HDD, for example, a nonvolatile memory, a compact disc (CD)-read only memory (ROM) or a DVD-ROM.

The server function block 340 performs basic functions other than the above functions of the setting information server 150. Since functions performed by the server function block 340 are well known to those skilled in the art, detailed description thereof is omitted.

As described above, the setting information server 150 may act as a hub site which provides setting information suitable for each video apparatus.

A method for configuring the TV 100 is now described with reference to FIG. 4. FIG. 4 is a flowchart explaining the method for configuring the TV 100 shown in FIG. 1.

The external database servers 160 transmit a variety of setting information for video apparatuses and pieces of content to the setting information server 150 (S401). The variety of setting information may be provided by content producers and video apparatus producers, or by users of video apparatuses.

The setting information server 150 classifies and stores the variety of setting information received from the external database servers 160 according to the type of video apparatus and the type of content (S410). More specifically, the CPU 320 of the setting information server 150 controls the variety of setting information received from the external database servers 160 to be classified according to the type of video apparatus and the type of content, and causes the classified setting information to be stored in the HDD 330. Accordingly, the setting information server 150 may construct a database containing suitable setting information.

The TV 100 receives an automatic setting command to automatically configure the TV 100 which is input by the user using the remote controller 275 (S420). If the user enters the automatic setting command, the controller 260 of the TV 100 requests the AV apparatus information from the external AV apparatuses 110 (S423).

Upon request, the external AV apparatuses 110 transmit the AV apparatus information and/or content information to the TV 100 (S426). For example, if the external AV apparatuses 110 comprise an AV apparatus for playback of video, for example a DVD player, the external AV apparatuses 110 transmit to the TV 100 content information regarding content to be played back on the AV apparatus for playback of video, together with the AV apparatus information, but if not, the external AV apparatuses 110 transmit only the AV apparatus information to the TV 100.

Alternatively, the TV 100 may receive the AV apparatus information and/or content information associated with the external AV apparatuses 110, prior to receiving the automatic setting command.

If both the automatic setting command and the AV apparatus information are received, the controller 260 of the TV 100 requests the setting information from the setting information server 150, and transmits the configuration information of the video system and the content information to the setting information server 150 (S429).

The configuration information of the video system comprises not only the TV information and AV apparatus information, but also information regarding the connection between the TV 100 and external AV apparatuses 110, as described above. Additionally, the content information may be information regarding content to be played back on the TV 100 or content information received from the external AV apparatuses 110.

The CPU 320 of the setting information server 150 selects setting information most suitable for the TV 100 and external AV apparatuses 110 based on the configuration information of the video system and the content information received from the TV 100 (S430). Additionally, the CPU 320 causes the selected setting information to be transmitted to the TV 100 (S435).

In other words, the selected setting information comprises the setting information for the TV 100 together with the setting information for the external AV apparatuses 110. Accordingly, the setting information server 150 may provide setting information most suitable for all of the TV 100, external AV apparatuses 110 and content to be played back on the TV 100 and external AV apparatuses 110.

The controller 260 of the TV 100 configures the TV 100 based on the setting information received from the setting information server 150 (S440). Additionally, the controller 260 causes the received setting information to be transmitted to the external AV apparatuses 110 (S445).

The external AV apparatuses 110 are configured according to the setting information received from the TV 100 (S450).

Therefore, the user may set the configuration of the TV 100 to the most suitable settings using the setting information server 150 according to the type of video apparatus present and the content. Additionally, the user may set the configuration of the external AV apparatuses 110 connected to the TV 100 to the most suitable settings.

For example, assuming that the movie "Harry Potter and the Order of the Phoenix" is played back on the DVD player 114 connected to the TV 100, and that 7.1-channel speakers are connected to the TV 100, if content information for the movie is set to a screen ratio of 2.40 : 1, an image quality of 1080p HD widescreen, and a sound mode of 5.1-channel, the TV 100 may transmit such content information to the setting information server 150 and receive setting information suitable for the content information from the setting information server 150. Accordingly, the TV 100 may be set to 2.40 : 1, 1080p HD widescreen and 5.1-channel mode, even when the 7.1-channel speakers are connected to the TV 100. Additionally, since the content is a movie, a screen mode of the TV 100 may be set to be a movie display mode, and the audio equalizer of the TV 100 may also be set to a movie mode. Therefore, the setting information server 150 may provide setting information most suitable for the content information and apparatus information, taking into consideration the above options.

While the setting information server 150 stores setting information received from the external database servers 160 in this exemplary embodiment of the present invention, the present invention is also applicable to a situation in which, for example, if the TV 100 requests setting information from the setting information server 150, the setting information server 150 may search for setting information most suitable for the TV 100 from the databases of the external database servers 160 and may transmit the setting information found as a result of search to the TV 100.

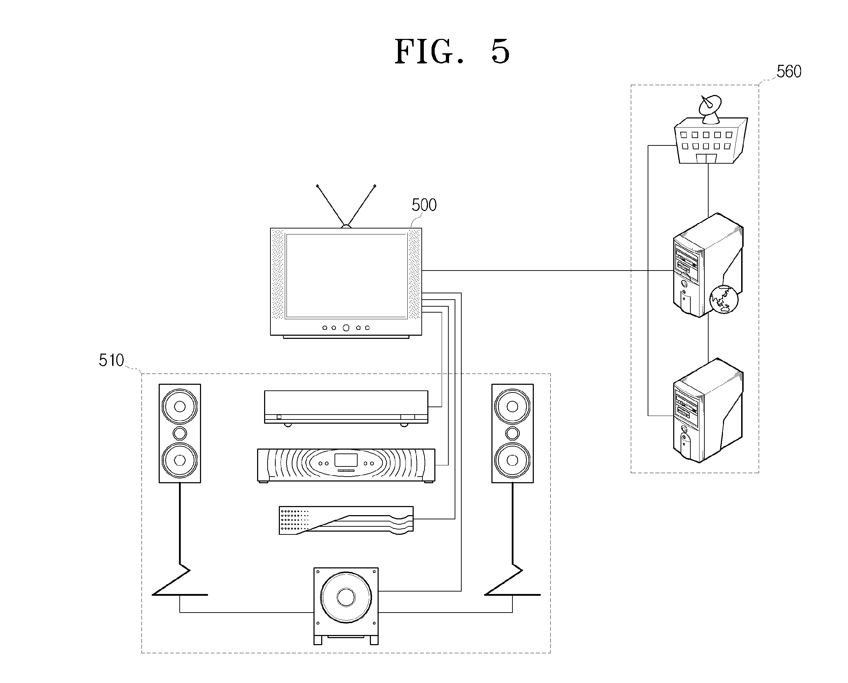

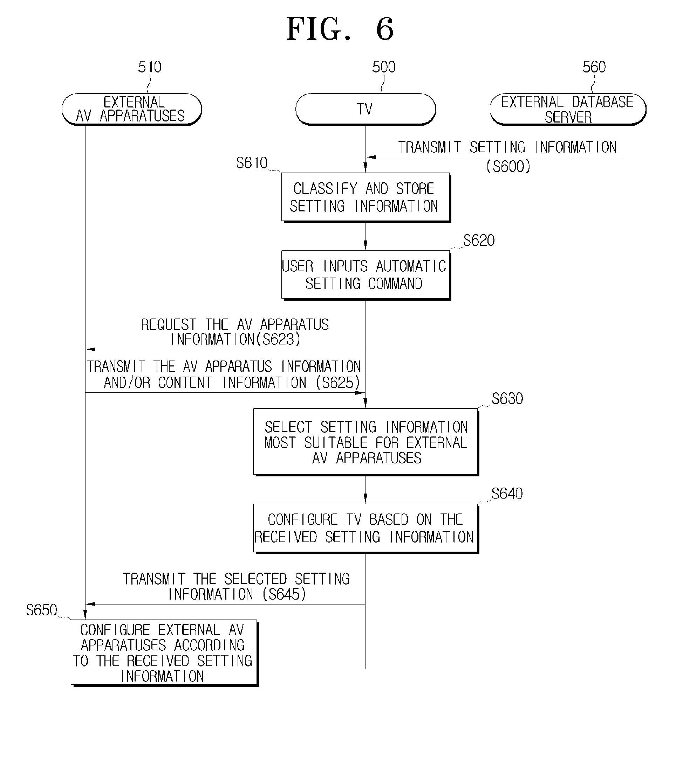

Hereinafter, another exemplary embodiment of the present invention will be described with reference to FIGS. 5 and 6. This exemplary embodiment of the present invention relates to a TV 500 which is able to store or search for setting information without requiring the setting information server 150.

FIG. 5 illustrates a configuration setting system having the TV 500 according to the exemplary embodiment of the present invention. The TV 500 of FIG. 5 is connected to external AV apparatuses 510, and is connected directly to external database servers 560.

Accordingly, the TV 500 may receive setting information directly from the external database servers 560, and may store the received setting information on a storage unit of the TV 500.

An operation of the TV 500 is now described with reference to FIG. 6 in detail. FIG. 6 is a flowchart explaining a method for configuring the TV 500 shown in FIG. 5. The method shown in FIG. 6 is substantially similar to the method shown in FIG. 4, so overlapping description will be omitted.

The external database servers 560 transmit setting information for various video apparatuses and content to the TV 500 (S600). The TV 500 classifies and stores the setting information received from the external database servers 560 (S610). In more detail, the TV 500 constructs a database containing the setting information received from the external database servers 560.

If a user enters an automatic setting information using a remote controller of the TV 500 (S620), the TV 500 requests AV apparatus information from the external AV apparatuses 510 (S623). Upon request, the external AV apparatuses 510 transmit the AV apparatus information to the TV 500 (S625). In operation S625, if there is content to be played back on the external AV apparatuses 510, content information regarding the content may also be transmitted to the TV 500 together with the AV apparatus information.

The TV 500 selects setting information most suitable for the TV 500 and the external AV apparatuses 510, based on information on the TV 500 and on the AV apparatus information and content information received from the external AV apparatuses 510 (S630). Additionally, the TV 500 is configured according to the selected setting information (S640).

The TV 500 transmits the selected setting information for the external AV apparatuses 510 to the external AV apparatuses 510 (S645). The external AV apparatuses 510 are configured according to the setting information received from the TV 500 (S650).

Therefore, the TV 500 may directly receive setting information from the external AV apparatuses 510 without being connected via the setting information server 150, and may be configured according to the received setting information.

While the TV 500 classifies and stores the setting information received from the external database servers 560 in this exemplary embodiment of the present invention, the present invention is equally applicable to a situation in which, for example, if a user inputs an automatic setting command, the TV 500 may automatically search for setting information most suitable for the TV 500 and the external AV apparatuses 510 from the external database servers 560, and may be configured using the setting information found as a result of the search.

Additionally, a TV is used as a video apparatus in this exemplary embodiment of the present invention, but the present invention is also applicable to video apparatuses other than the TV, for example, a portable multimedia player (PMP), an STB or a digital multimedia broadcasting (DMB) terminal.

As described above, according to exemplary embodiments of the present invention, a video apparatus may receive setting information corresponding to content information and apparatus information from external servers, and may be configured according to the setting information received from the external servers, so it is possible for a user to set the configuration of a video system comprising the video apparatus more conveniently.

Additionally, the external servers may provide to the user, setting information for an optimum viewing environment selected using information regarding content which a user desires to play back on a video apparatus and using configuration information of a video system having the video apparatus, so the user can configure the video apparatus and external apparatuses using the optimum setting information without needing to manually input setting values.

Furthermore, the setting information server may download setting information from external database servers provided by a content producer or video apparatus producer, thereby providing the video apparatus used by the user with setting information more suited to the video apparatus.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.
Attention is directed to all papers and documents which are filed concurrently with or previous to this specification in connection with this application and which are open to public inspection with this specification, and the contents of all such papers and documents are incorporated herein by reference.
All of the features disclosed in this specification (including any accompanying claims, abstract and drawings), and/or all of the steps of any method or process so disclosed, may be combined in any combination, except combinations where at least some of such features and/or steps are mutually exclusive.
Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.
The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A video apparatus comprising:
an interface which is arranged to transmit content information from the video apparatus (100) to an external server (160) and to receive setting information corresponding to the content information from the external server; and
a controller (260) which is arranged to configure the video apparatus according to the setting information received by the interface.

2. The video apparatus as claimed in claim 1, wherein the setting information comprises at least one of setting values of the video apparatus and setting values of an external apparatus communicably linked to the video apparatus.

3. The video apparatus as claimed in claim 2, wherein the controller is arranged to cause the setting values of the external apparatus to be transmitted to the external apparatus.

4. The video apparatus as claimed in any of claims 1 to 3, wherein the content information comprises one of information regarding content to be played back on the video apparatus and information regarding content received from an external apparatus communicably linked to the video apparatus.

5. The video apparatus as claimed in anyof claims 1 to 4, wherein the setting information comprises at least one of default setting values, screen setting values, audio setting values and remote control setting values.

6. The video apparatus as claimed in any of claims 1 to 5, wherein the content information comprises at least one of information regarding a title, information regarding a producer and information regarding a genre of content.

7. A method for configuring a video apparatus, the method comprising:
transmitting content information from the video apparatus to an external server;
receiving, at the video apparatus, setting information corresponding to the content information from the external server; and
configuring the video apparatus according to the setting information which is received.

8. The method as claimed in claim 7, wherein the setting information comprises at least one of setting values of the video apparatus and setting values of an external apparatus communicably linked to the video apparatus.

9. The method as claimed in claim 8, further comprising transmitting the setting values of the external apparatus from the video apparatus to the external apparatus.

10. The method as claimed in any of claims 7 to 9, wherein the content information comprises one of information regarding content to be played back on the video apparatus and information regarding content received from an external apparatus communicably linked to the video apparatus.

11. The video apparatus as claimed in anyof claims 1 to 6, wherein the interface is arranged to transmit video apparatus information to an external server and to receive setting information corresponding to the video apparatus information from the external server; and
the controller is arranged to configure the video apparatus according to the setting information received by the interface.

12. The video apparatus as claimed in claim 11, wherein the interface is arranged to transmit configuration information of a video system comprising the video apparatus to the external server;
the setting information comprises at least one of setting values of the video apparatus and setting values of an external apparatus communicably linked to the video apparatus; and
the controller is arranged to cause the setting values of the external apparatus to be transmitted to the external apparatus.

13. The video apparatus as claimed in claim 12, wherein the configuration information of the video system comprises the video apparatus information and external apparatus information.

14. The video apparatus as claimed in any of claims 11 to 13, wherein the setting information comprises at least one of default setting values, screen setting values, audio setting values and remote control setting values.

15. The video apparatus as claimed in any of claims 11 to 14, wherein the video apparatus information comprises at least one of information regarding a manufacturer, information regarding a production number and information regarding a model name of the video apparatus.
